# EUROPEAN PATENT SPECIFICATION

(11) **EP 0 753 687 B1**
(45) Date of publication and mention of the grant of the patent: **24.05.2000**
(21) Application number: 96850134.6
(22) Date of filing: 09.07.1996
(51) Int. Cl.: F16H 55/17, F16D 23/02, F16H 3/12

(54) **Transmission with helical gears**
Transmission mit Schrägzahnstirnrädern
Transmission à engrenages hélicoidaux

(30) Priority: 10.07.1995 SE 9502535
(43) Date of publication of application: 15.01.1997
(73) Proprietor: AB VOLVO, 405 08 Göteborg (SE)
(72) Inventor: Johannesson, Stig-Erik, 442 41 Kungälv (SE)
(74) Representative: Hellborg, Karl Torild

(56) References cited:
- WO-A-88/09450
- DE-A- 3 033 625
- DE-B- 1 034 040
- DE-B- 1 049 168
- DE-C- 2 945 967
- SE-C- 501 051

## Description

The present invention relates to a transmission comprising a rotary shaft on which a gear with helical gearing is rotatably mounted and lockable by coupling teeth and an engaging sleeve to the rotary shaft, said gear having an annular surface concentric to the centerline of the shaft, said annular surface abutting a corresponding abutment on the shaft, both the annular surface and the abutment forming an angle α relative to a normal to the centerline of the shaft.

Helical gears are known in various types of transmissions, for example releasable gears mounted on sleeve or needle bearings on transmission shafts in both trucks and cars. These gears are coupled to their shafts via engaging sleeves which generally include a synchronizing mechanism. Conventionally, these gears have axial support surfaces which are perpendicular to the shaft centerline. The gear thus abuts with a perpendicular axial surface against a corresponding abutment on the shaft.

DE-B-1 049 168 discloses a previously known transmission of the aforesaid kind, which is provided with a synchronizing mechanism for clutch couplings. Said mechanism is equipped with a synchronizing ring provided with coupling teeth, which by means of a coupling means is axially displaceable into friction engagement with a further coupling means.

When torque is transmitted to the gear engaged therewith, due to the obliquely cut teeth, a portion of the torque will be transmitted as axial force on the engagement side of the releasable gear. A portion of this axial force is absorbed in the abutment surface between the perpendicular axial surface of the gear and the abutment on the shaft. The remaining axial force acting on the gear will give rise to a tilting moment on the gear, striving to tilt the gear relative to the shaft. This in turn gives rise to increased local forces on the needle bearing.

Furthermore, if the gear is thin, the gear can be deformed by gear engagement forces, so that the originally round gear will assume another shape.

In order to counteract both the increased forces on the bearings and the deformation of the gear, it would be necessary to increase the width of the gear and the bearing and manufacture the gear in heavier material. This would require an increase in the dimensions of the gearbox, making it more expensive and increasing the weight and dimensions.

The purpose of the invention is thus to achieve a transmission of the type described by way of introduction, which has an arrangement for bearing a helical gear on a shaft in a gearbox for example, which makes it economically and practically possible to design a compact gearbox which can withstand high torque.

This is achieved according to the invention by virtue of the fact that the angle α lies in an interval of approximately 30-80°. A preferred embodiment of the invention is characterized in that the angle α is 45°.

The preferred embodiment will be described in the following description with reference to the accompanying schematic drawing.
- Figure 1: shows a releasable gear which is conventionally born on a shaft with a perpendicular axial support surface,
- Figure 2: shows a releasable gear according to Figure 1 which has a bevelled axial support,
- Figure 3: shows a detail of the releasable gear in Figure 2 on a larger scale.

A gearbox of a known type has at least one shaft 4, on which a helical gear 6 is rotatably mounted by means of a needle bearing 8. The gear 6 has coupling teeth 9, by means of which the gear can be locked to the shaft 4 with the aid of an engaging sleeve (not shown) with an associated clutch coupling and a synchronizing mechanism (not shown).

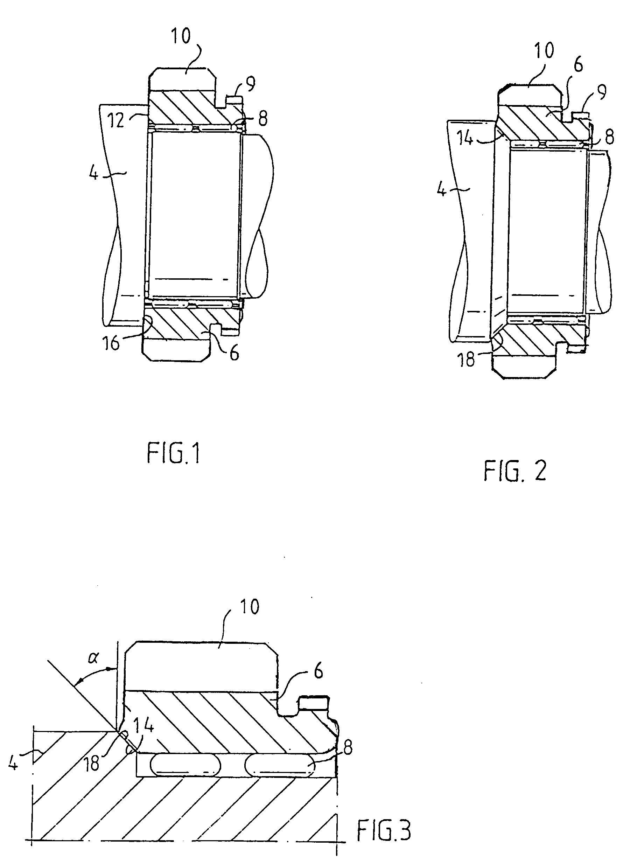

The helical gear has obliquely cut teeth 10 for engagement with corresponding teeth on a gear engaging therewith. On that side of the gear 6 which is opposite to the coupling teeth 9, the gear has an annular surface 12;14 which is concentric to the centerline of the shaft. The annular surface 12;14, when the gear is unloaded, slidably abuts against a corresponding abutment 16;18. The arrangement shown in Figure 1 has a conventional axial support, where both the annular surface and the abutment form a 90° angle relative to the centerline of the shaft. In Figure 2, the arrangement according to the invention is shown in which the annular surface 14 of the gear 6 is made as an interior truncated cone and the abutment 18 is made in a corresponding manner as an external truncated cone.

Both the annular surface 14 and the annular abutment 18 form an angle α to a normal to the centerline of the shaft. It has been determined that the angle α should not exceed 80°, since the gear will then tend to jam onto the shaft. Likewise, a too small angle α will provide both insufficient guiding of the gear on the shaft and insufficient transmission of radial forces. The angle α is therefore typically 45°. Radial forces on the needle bearing 8 are thereby reduced when the gear 6 is loaded, since the conical abutment 18 absorbs, via the conical annular surface 14, a portion of the inwardly directed radial forces.

Since the gear 6 in its loaded state is locked to the shaft 4, there will be no sliding between the abutment 18 and the annular surface 14, since these are pressed against each other by the axial and radial forces arising in this state.

In the unloaded state, the gear and the shaft are freely rotatable relative to each other, and due to the insignificant axial and radial forces in this case, sliding can occur in the conical contact surface between the gear 6 and the shaft 4.

By virtue of the fact that the conical annular surface 14 of the gear is in contact with the corresponding abutment 18 on the shaft, there is a preservation of the cylindrical shape of the gear, both in the loaded and unloaded state.

For certain applications with special dimensioning requirements for the gearbox and for special values of the torque to be transmitted, it is suitable to allow α to assume values in an interval of 30-80°.

## Claims

1. Transmission comprising a rotary shaft (4), on which a gear (6) with helical gearing (10) is rotatably mounted (8) and lockable by coupling teeth (9) and an engaging sleeve to the rotary shaft (4), said gear having an annular surface (14) concentric to the centerline of the shaft, said annular surface abutting a corresponding abutment (18) on the shaft, both the annular surface and the abutment forming an angle α relative to a normal to the centerline of the shaft, **characterized in** that the angle α lies in an interval of approximately 30-80°.

2. Transmission according to Claim 1, **characterized in** that the angle α is 45°.

## Patentansprüche

1. Transmissionsorgan, umfassend eine umlaufende Welle (4), auf der ein Zahnrad (6) mit Schrägverzahnung (10) drehbar (8) und durch Kupplungszähne verriegelbar (9) angebracht ist, und eine Mitnehmermuffe auf der Drehwelle (4) , wobei das Zahnrad eine mit der Mittelachse der Welle konzentrische Ringfläche (14) besitzt, die an eine entsprechende Anlage (18) auf der Welle anliegt, wobei sowohl die Ringfläche als auch die Anlage einen Winkel α relativ zu einer Senkrechten zur Mittelachse der Welle bilden, **dadurch gekennzeichnet, dass** der Winkel α in einem Bereich von ungefähr 30 - 80° liegt.

2. Transmissionsorgan nach Anspruch 1, **dadurch gekennzeichnet, dass** Winkel α 45° beträgt.

## Revendications

1. Transmission comprenant un arbre rotatif (4), sur lequel un pignon (6) ayant un engrenage hélicoïdal (10) est monté en rotation (8) et est verrouillable par des dents de couplage (9) et un manchon d'engagement sur l'arbre rotatif (4), ledit pignon ayant une surface annulaire (14) concentrique à l'axe de l'arbre, ladite surface annulaire étant en butée contre une portée correspondante (18) ménagée sur l'arbre, la surface annulaire et la portée formant toutes deux un angle (α) par rapport à une normale à l'axe de l'arbre, caractérisée en ce que l'angle (α) a une valeur située dans un intervalle d'environ 30-80°.

2. Transmission selon la revendication 1, caractérisée en ce que l'angle (α) est égal à 45°.
